# EUROPÄISCHE PATENTSCHRIFT

(11) **EP 1 407 357 B1**
(45) Veröffentlichungstag und Bekanntmachung des Hinweises auf die Patenterteilung: **20.09.2006**
(21) Anmeldenummer: 02754861.9
(22) Anmeldetag: 10.07.2002
(51) Int. Cl.: G06F 9/46

(54) **BEFESTIGUNGSKLAMMER ZUR VERBINDUNG VON HOLZBAUTEILEN**
FIXING CLAMP FOR JOINING WOODEN BUILDING COMPONENTS
BRIDE DE FIXATION SERVANT A L'ASSEMBLAGE D'ELEMENTS DE CONSTRUCTION EN BOIS

(30) Priorität: 16.07.2001 DE 20112018 U; 27.11.2001 DE 10157807
(43) Veröffentlichungstag der Anmeldung: 14.04.2004
(73) Patentinhaber: Braun & Würfele Gmbh & Co., 72270 Baiersbronn (DE)
(72) Erfinder: REIF, Dieter, 72667 Schlaitdorf (DE); BADER, Joachim, 70182 Stuttgart (DE)
(74) Vertreter: Mierswa, Klaus
(86) Internationale Anmeldenummer: PCT/EP2002/007667
(87) Internationale Veröffentlichungsnummer: WO 2003/009138

(56) Entgegenhaltungen:
- GB-A- 1 462 482
- US-A- 1 974 259
- US-A- 4 620 403

## Beschreibung

### Technisches Gebiet:

Die Erfindung bezieht sich auf eine Befestigungsklammer zum Verbinden von Holzbauteilen untereinander und auf einem Untergrund, insbesondere von Bohlen von Balkon- und Terrassenabdeckungen im Freien, mit einem vertikalen Steg, oben zu beiden Seiten des Steges mindestens je einem senkrecht/horizontal abragenden, zungenförmig zugespitzten Nagel sowie unten zu beiden Seiten des Steges senkrecht/horizontal abragenden Winkelsohlen, gemäß dem Oberbegriff des Anspruchs 1 (s. zum Beispiel die US-PS-2,116,737).

### Stand der Technik:

Verbindungen von Holzteilen mit dem Ziel, im Freien zwei parallele Bohlen auf einem Untergrund so zu befestigen, dass sich zum einen zwischen den Bohlen ein Luftspalt und ein Raum für das Arbeiten des Holzes und zum anderen zwischen dem Untergrund und den Bohlen ebenfalls ein Luftspalt - zur Luftzirkulation und als Maßnahme gegen das Verfaulen - befindet, sind bekannt. So wird in der gängigen Praxis zwischen die Bohlen in Längsrichtung eine Distanzleiste gesteckt und als Unterlage unter die Bohlen werden schmale Leistenstücke gelegt. Die Befestigung erfolgt dann mittels Schrauben, mit denen die Bohlen vertikal durch die Auflageleistenstücke hindurch auf dem Untergrund befestigt werden. Die Distanzleisten werden anschließend entfernt. Abgesehen davon, dass die Schrauben der durchbohrten Bohlen von oben sichtbar sind, ist häufig die Holzoberfläche aufgebrochen, so dass sich Risse und abstehende Splitter bilden. Über die Löcher dringt Feuchtigkeit und schädigt das Holz. An den Splittern können sich barfuss laufende Kinder leicht verletzen und um die Löcher herum bildet die Witterung Verfärbungen, welche die bereits vorher unschöne Ästhetik der Schrauben noch weiter vertieft. Schließlich entstehen bei langen Bohlen um die Schrauben herum Weitungen im Holz, sofern das Holz und der Untergrund verschiedene Längenausdehnungskoeffizienten aufweisen. Trotzdem ist diese Methode noch vielfach in Anwendung, weil sie die einzige ist, die ausreichende Belüftungsabstände und damit gute Luftzirkulation gewährleistet und eine große Nagellänge erlaubt. Dabei sind mindestens ca. 5 mm Fugenabstand und Bodenabstand üblich.

Aus der o.g. US-PS 2,116,737 ist ein Verbindungssystem bekannt, durch welches mit Nut und Feder versehene Bretter untereinander und auf einem Untergrund fixiert werden. Dabei wird eine Befestigungsklammer verwendet, deren vertikaler Steg an der Oberseite drei krallenförmig senkrecht herausragende Nägel aufweist, die in die Bohlenflächen eindringen. An der unteren Stegseite sind senkrecht abgebogen zwei Winkelsohlen vorgesehen, jeweils von ca. halber Steglänge, die in entgegengesetzte Richtungen abgebogen sind (links/rechts). Zur Einhaltung des Abstands und Befestigung am Untergrund ist eine am Untergrund anschraubbare U-förmige Schiene eingesetzt, welche die Klammer über seitliche Stegschultern festhält, wobei die Bohlen auf den Schenkeln der Schiene aufliegen. Es besteht somit kein direkter Kontakt der Klammer mit der zu verbindenden Fläche, und bei der Montage müssen die Teile schräg gestellt werden, um dann eine Verklemmung unter Spannung zu erzielen, wobei das Geradestellen des Teiles mit einfachem Werkzeug z. B. einem Hammer nicht möglich ist. Zudem sind die relativ kurzen Krallen breit und spitz ausgelegt, so dass im Holz einerseits ein Staudruck und andererseits eine Keilwirkung entsteht, welche zu Rissesbildung führen können. Zudem sind die Krallen in Fortsetzung der Stegoberseite geformt, wodurch ein Blechstreifen entsprechend größerer Länge verwendet werden muss. Schließlich sind durch diese bekannten Klammern keine Abstände zwischen den Brettern vorgesehen, wodurch keine Luftzirkulation möglich und kein Schwund berücksichtigt ist, so dass diese Klammern für den Außenbereich nicht geeignet sind.

Aus der US-PS 2,066,813 ist ein ähnlich wie die vorher beschriebene Klammer aufgebautes Verbindungselement bekannt, welches durch längere Winkelsohlen Auflageflächen besitzt, die ein leichteres Einlegen der Platten ermöglicht und die zudem ein Befestigungsloch aufweisen. Diese Verbindungsklammern sind zur Befestigung von Wand-Verkleidungsplatten wie Faser- und Korkplatten ausgelegt, mit schneidenartigen Krallennägeln geringerer Stabilität, die für Holz nicht geeignet sind. Eine Abstandshalterung ist nicht notwendig, ja unerwünscht, da diese Klammern für den Außenbereich aus diesem Grunde nicht verwendbar sind.

Schließlich ist aus der US-PS 441,227 ein Verbindungselement bekannt, welches zur Herstellung von Eckverbindungen von Kisten verwendbar ist. Die Klammer ist dabei aus einem Metallband gefertigt, bei dem als vertikaler Steg ein zungenförmiger Winkelteil aus dem Band geschnitten und senkrecht hochgebogen ist. In der Platte und im Steg sind zudem drei Eckzungen als Nägel herausgeformt, die in die zu verbindenden Bretter flachseitig eingeschlagen werden. Für eine stirnseitige von außen nicht sichtbare Verbindung sind diese bekannten Klammern nicht geeignet:

### Technische Aufgabe:

Aufgabe der Erfindung ist es, eine Befestigungsklammer oben genannter Gattung anzugeben, die ein kostengünstiges Verbindungsteil darstellt, die sich optimal für eine sichere Verlegung von Holzbohlen im Freien eignet, mit entsprechenden Belüftungsabständen, die dem hohen Einpresswiderstand von Hartholz und Thermoholz standhält, ohne Reißen oder Splittern des Holzes.

### Offenbarung der Erfindung sowie deren Vorteile:

Diese Aufgabe wird durch eine Befestigungsklammer oben genannter Gattung dadurch gelöst, dass die Befestigungsklammer ein aus zwei L-Profilen zusammengesetzter Doppelwinkel ist, der Steg ein aus zwei Profilschenkeln zusammengesetzter Doppelsteg ist, und in mindestens einer der Winkelsohlen mindestens eine Befestigungsbohrung vorgesehen ist. Vorteilhafte Ausgestaltungen sind in den Unteransprüchen gekennzeichnet.

Dem gemäß ist die Befestigungsklammer ein aus zwei L-Profilen zusammengesetzter Doppelwinkel und weist einen im Wesentlichen umgekehrten bzw. liegenden T-Querschnitt aufweist. Die Doppelwandigkeit des Steges bringt aber auch den Vorteil einer erhöhten Festigkeit des Steges und einer Abstützung der Nägels des einen Wandteiles durch den ändern Wandteil, insbesondere beim Eintreiben der Klammern bzw. Nägel. Dabei ist der Steg ein aus zwei Profilschenkeln gebildeter Doppelsteg, also doppelwandig, so dass der Abstand zwischen den Bohlen mindestens die doppelte Blechdicke aufweist. Zudem ist in mindestens einer der beiden Winkelsohlen mindestens eine Befestigungsbohrung vorgesehen, über welche die Klammern - und damit die Bohlen - am Untergrund befestigbar sind.

Selbstverständlich können die Profilschenkel, die den Doppelsteg bilden, auch selbst gedoppelte Schenkel sein, indem beim Biegen des Blechzuschnitts zum L-Profil, jeweils der Schenkel, der beim Zusammenfügen der Profile als Doppelstegwand dient, durch entsprechendes Einbiegen eines Materialstreifens gedoppelt wird, so dass dann insgesamt z. B. ein Vierfachsteg erhaltbar ist. Die nach innen gebogene Verstärkungs- bzw. Abstandswand kann dabei die ganze Steglänge und Steghöhe ausfüllen. Sie kann aber auch nur in min. einem kurzen Längsstreifen, vorzugsweise am oberen Stegdrittel, oder in mehreren parallelen Querstegen bestehen, die vorzugsweise in Höhe bzw. in der Zone des Nagels des anderen Profils vorzusehen sind, um dem Gegendruck beim Einpressen des Nagels optimiert zu begegnen.

Von Vorteil ist, wenn der Klammer-Doppelwinkel aus zwei L-förmigen Winkelprofilen besteht, die jeweils mit einem Profilschenkel flach aneinander liegend zu einem T-Profil miteinander durch Schweißen, Nieten oder fügetechnisch verbunden sind. Hierdurch können aus entsprechenden Blechstreifen L-förmig gebogene Winkelbleche in einfacher Weise zu einer Doppelwinkelplatte zusammengefügt werden, wobei auch denkbar ist, hier handelsübliche Profile zu verwenden.

Besonders vorteilhaft ist, wenn die Doppelwinkelklammer aus einem durchgehenden Metallstreifen biegetechnisch, also aus einem Stück geformt ist. Der mittig in die Blechplatte eingebogene Doppelsteg bedarf keiner weiteren Verbindungsvorkehrungen.

Vorteilhaft ist des weiteren, wenn die zungenförmigen Nägel nahe des oberen Stegendes angeordnet und direkt aus dem Stegmaterial geschnitten und senkrecht herausgebogen sind, so dass keine zusätzliche Materialbreite zum Schneiden und Formen krallenförmiger Nägel vorzusehen sind, wie bei den bekannten Klammern. Gleichzeitig können die aus den Doppelstegwänden herausgebogenen Nägel durch die jeweils dahinter befindliche Wand abgestützt bzw. über diese ins Holz eingedrückt werden.

Die beidseitig des Doppelsteges angeordneten Befestigungsnägel sind dabei in vorteilhafter Weise so ausgebildet und angeordnet, dass je Stegseite vorzugsweise nur ein Nagel vorgesehen ist, und zwar kann dieser mittig zur Längserstreckung des Steges oder in Längsrichtung außermittig angeordnet sein, z.B. jeweils bei Beginn des äußeren Viertels des Steges. Dabei sind die beiden senkrecht aber gegenläufig von den beiden Stegflächen frei abstehenden Nägel und auch die Klammer insgesamt, wie im Weiteren noch ausgeführt wird, zu einem mittig am Steg vorhandenen Symmetriepunkt, versetzt seitensymmetrisch, also die Klammerseiten sind bei Versatz um 180° der Klammer jeweils identisch. Durch diese Punktsymmetrie muss die Klammer bei der Montage nicht speziell orientiert werden, so dass eine Automatisierung der Montage denkbar ist, bei der die Klammern automatisch zugeführt und mit einem Schlag- oder Druckluftpressgerät montiert werden können.

Dabei können die Nägel horizontal oder vertikal, d.h. parallel oder senkrecht im Verhältnis zu den Winkelsohlen aus dem Doppelsteg herausgebogen sein. Bei Klammern mit niedrigerem Steg wird es vorteilhafter sein, die Nägel horizontal, also parallel - vorzugsweise von innen nach außen herauszubiegen. Bei höheren Stegen, also Stegen mit größerer Höhe als die Nagellänge, kann in vorteilhafter Weise der Nagel in vertikaler Richtung, und zwar nach oben herausgedrückt vorgesehen sein. Ist dann noch in besonders vorteilhafter Weise der Befestigungsnagel rinnen- oder bogenförmig nach unten offen gewölbt, auch an der Nagelwurzel, zur Spitze hin sich verjüngend, mit einem geringen Radius an der Spitze, dann erinnert die Nagelform auffällig an den oberen Teil eines Vogelschnabels. Die Nagelform ist somit praktisch der Natur abgesehen und äußerst biegesteif über seine gesamte Länge.

Von besonderem Vorteil ist auch, wenn am oberen, also äußeren Teil des Doppelsteges beidseitig in Längsrichtung des Steges verlaufend jeweils eine Ausbauchung in Form einer Sicke vorhanden ist, die gemeinsam eine in Längsrichtung verlaufende Doppelsicke und damit einen Stegkopf bilden. Aus den Seitenflächen dieses innen hohlen Stegkopfes ragen die Nägel hervor. Hierdurch kann eine größere Breite des Steges - und damit ein größerer Abstand zwischen den Bohlen erreicht werden. So kann erreicht werden, dass bei einer Materialdicke von nur ca. 1,5 mm die Breite des Stegkopfes 5 mm oder wesentlich mehr beträgt, je nach Auslegung der Sicken. Selbstverständlich ist diese Ausführung sowohl bei den zweistückig geschweißten als auch bei den einstückig ausgeformten Klammern möglich.

Dabei kann der an seiner Oberseite den Stegkopf tragende Steg einen geschlossenen Stegfuß besitzen, d.h. die beiden Stegbleche liegen hier satt aufeinander. Der Stegfuß kann aber auch offen gestaltet sein, wobei die Bleche mit einem Öffnungsspalt von mindestens 0,5 mm zueinander beabstandet sind. Abgesehen von der dadurch erreichten guten Luftzirkulation auch durch den Steg hindurch, wird durch den offenen Stegfuß eine optimale Elastizität der Klammer erreicht, die sich bei Schrumpf- oder Quellvorgängen des Holzes sehr positiv auswirkt, da die Klammer in diesem Falle sozusagen mitarbeitet, sich also elastisch zusammendrücken oder auseinanderziehen lässt.

Da es durch Vorhandensein des hohlen Stegkopfes und des offenen Stegfußes beim Einschlagen dieser querelastischen Klammer Probleme geben könnte, ist von Vorteil, wenn jeweils ungefähr in Nagelhöhe in der Gegenwand des Stegkopfes eine Öffnung zum Hindurchführen eines Einschlag- oder Gegenhaltewerkzeuges vorgesehen ist. So kann durch diese Öffnung hindurch auf die Innenseite der Wand, aus welcher der Nagel absteht, gegengehalten bzw. eingewirkt werden.

Ein weiterer Vorteil besteht darin, dass die Breiten der Winkelsohlen wesentlich größer sind als die Nägellänge, vorzugsweise doppelt so groß bzw. breit, so dass die Winkelsohlen weit unter den Nägeln horizontal herausragen. Abgesehen von der hierdurch erreichten guten Standfestigkeit der Klammer und der guten Druckübernahme durch die Bohlenbelastung, kann die Bohle auf das hinter dem Nagel befindliche freie Ende der Winkelsohle gelegt werden, so dass dieses sowohl eine Auflage als auch eine Gleitbahn für die Bohle bildet.

Die Winkelsohlen sind dabei gleich lang wie der Doppelsteg, da die Klammer insgesamt durch Biegen eines rechteckigen Blechstreifens hergestellt wird. Die Winkelsohlen können jedoch auch nur die halbe Länge des Doppelsteges aufweisen, wobei die beiden Halbsohlen um die halbe Steglänge versetzt, also wechselseitig vom Steg abragend angeordnet sein sollten. Diese Halbsohlen bringen in erster Linie den Vorteil einer Materialeinsparung, und es ist selbstverständlich, dass zur besseren Zugänglichkeit des Sohlen-Schraubenloches die Nägel jeweils auf der anderen Steghälfte angeordnet sind.

Von besonderem Vorteil ist auch, wenn an den Winkelsohlen jeweils mindestens eine nach oben, in Richtung auf die Nägel aufragende Erhebung in Form einer in Richtung der Breitenerstreckung verlaufenden Sicke vorgesehen ist, mit einem bogen- oder dachförmigen Querschnitt. Diese dienen in erster Linie der Erhöhung der Auflagefläche der Winkelsohlen, da die Bohlen auf der Oberfläche dieser Sicken aufstehen. Je nach Höhe dieser Abstands- bzw. Auflagesicken ist auch die Beabstandung der Bohlen zum Untergrund beeinflussbar und eine optimale Luftzirkulation erreichbar. Dabei kann eine besonders gute und sichere Bohlenauflage auf den Winkelsohlen erreicht werden, wenn zwei Sicken parallel in Breitenerstreckung jeweils benachbart zum äußeren Seitenrand der Winkelsohlen vorgesehen sind. Dadurch besteht die Möglichkeit, das Befestigungsloch mittig zwischen den beiden Sicken anzuordnen.

Das Loch für die Befestigungsschraube ist in vorteilhafter Weise so ausgebildet, dass der Senkwinkel in der Winkelsohle größer ist als der Schraubenkopfwinkel. Dies bewirkt, dass bei Dehnung oder Schrumpfung der Bohle ein Sich-schrägStellen des Schraubenkopfes und somit ein mögliches Abreißen der Schraube vermieden wird. Zudem ist von Vorteil, wenn die Befestigungslöcher als quer verlaufende Langlöcher ausgebildet sind, wodurch ein witterungsbedingtes Arbeiten (Quellen oder Schrumpfen) der Bohlen ungehindert durch die Schrauben möglich ist.

Gemäß einer Weiterbildung der Erfindung wird eine vorteilhafte Sicherheit gegen Verdrehen dadurch erreicht, dass über die Winkelsohlen ein Formschluss mit dem Untergrund gebildet wird, und zwar dadurch, dass an den Winkelsohlen mindestens eine krallenförmige Messerleiste nach unten hervorstehend eingeformt bzw. herausgebogen ist. Diese können an beiden Seitenkanten der Winkelsohlen vorgesehen sein, zumindest am vorderen Stirn- bzw. Seitenende und auf einer Länge von mindestens einem Sechstel der Sohlenbreite. Beim Anziehen der Befestigungsschrauben drücken sich diese aus den Winkelsohlen nach unten herausragenden Messerleisten ins Holz. Falls das Eindringen ins Holz auf der der Schraube gegenüberliegenden Sohlenseite nicht vollständig ist z.B. bei sehr hartem Holz, genügt ein Draufschlagen oder Drauftreten von oben, um auch dort den Formschluss zu vervollständigen. Um ein besonders gutes Einkrallen zu ermöglichen, kann auch mittig zur Längserstreckung der Winkelsohlen eine U-förmige Rechteckausnehmung vorgesehen sein, wobei die in Breitenerstreckung der Sohle verlaufenden Seitenkanten als krallenförmige Messerleisten nach unten herausgedrückt sind.

Von Vorteil ist des weiteren, wenn an den Längsseiten der Winkelsohlen Auflaufschrägen vorgesehen sind, die auch die ggf. entsprechenden Enden der Sicken mit umfassen. Durch die Ausformung einer Anlaufschräge an den Enden der Winkelsohlen, parallel zum Steg, können die schweren Bohlen mühelos auf die Doppelwinkelplatte geschoben werden, um anschließend montiert zu werden.

Auch ist von Vorteil, wenn die beiden die Klammer bildenden L-Profile selbständige Einzelprofile sind, die so miteinander in Verbindung stehen bzw. bringbar sind, dass sie eine zumindest geringfügige Querverschiebung der beiden Profile zueinander, nicht jedoch in Längsrichtung, erlauben. Dadurch besteht die Möglichkeit, dass im Montagezustand die beiden Profile jeweils zusammen mit den Bohle, in die sie eingeschlagen sind, sich mitbewegen, also die Quer-Schrumpf- oder -Quell-Bewegungen der Bohlen mitmachen. Sie sind aber gleichzeitig über min. ein Quer-Führungselement zwar querverschieblich aber nicht längsverschieblich und nicht höhenverschieblich miteinander verbunden. Sind dann noch in den Winkelsohlen als Befestigungsbohrungen quer sich erstreckende-Langlöcher vorgesehen, dann ist eine optimale Mitarbeit der Klammern mit den Bohlen gesichert.

Als Quer-Führungselemente sind aus den Profilstegen senkrecht herausgescherte und zu den Winkelsohlen gleichzeitig gegenfluchtende Führungszungen vorgesehen, die rechteckig sein können, während als mit diesen zusammenarbeitende Führungsöffnungen, an den Stegunterseiten und in die Winkelsohlen quer sich öffnend bzw. erstreckend eingearbeitete Führungsausschnitte oder Führungssicken vorgesehen sind.

Die Führungssicken können dabei in vorteilhafter Weise gleichzeitig die vorbeschriebenen Abstandssicken sein, in zur inneren Stegseite hin offenen und entsprechend angepasster Abstimmung mit den Zungenabessungen ausgelegter Ausführung, gleichzeitig einen Quertunnel zur optimierten Belüftung bildend. Auch hier ist in zweckmäßiger bzw. vorteilhafter Weise eine Mittensymmetrie der Klammer vorzusehen bzw. zu beachten, also z. B. die Nägel jeweils mittig und zueinander fluchtend und die Führungselemente entsprechend außermittig versetzt anzuordnen, so dass identische Klammerprofile vorhanden sind. Bei einem 180°- Verschwenken bzw. Umsetzen der Klammer sind so stets gleich ausgestaltete Klammerseiten vorhanden und es muss allgemein nicht überlegt werden, welches die linke oder die rechte Seite der Klammer ist, um diese richtig mit der Bohle zu verbinden, denn beide Seiten sind vorzugsweise identisch.

Zwar kann selbstverständlich auch eine mittige Anordnung der Führungselemente vorgesehen sein und eine außermittige Anordnung der Nägel. Dies bedingt jedoch unterschiedliche Profilteile einer Klammer, da dann z. B. das eine Profilteil die mittige Zunge und das andere den mittigen Führungsausschnitt besitzt.

Schließlich kann an den oberen Auflageflächen der Winkelsohlen oder deren Führungs- und /oder Auflagesicken min. je eine Einkerbung bzw. Ausbuchtung in Form eines schräg in Richtung des Vertikalsteges ansteigenden Nagels vorgesehen sein, vorzugsweise mittensymmetrisch. Diese dienen zur Arretierung des Nagels gegen das Herausziehen aus den Bohlen. Dabei sind diese Nagel-Ausstülpungen so gestaltet, dass deren mittige Oberseiten in Stegrichtung hin ansteigend oder parallel zur Winkelsohlen- bzw. Sickenoberfläche verlaufen während die Unterseiten bzw. die seitlichen, insgesamt schräg verlaufenden Nagel-Scherkanten oder Scherflächen die Nägel zum Steg hin konisch erweitern.

Abschließend sei noch darauf hingewiesen, dass die Erfindung widersprüchliche Gegebenheiten bzw. Aufgaben löst, nämlich den Widerspruch aus kostengünstiger Fertigung (= dünnes Material), großen Abständen (= dickes Material), hoher Nagelfestigkeit (= dickes und breites Material) und kein Splittern (= lange und dünne Nägel), dies alles durch die besonderen Formgebungen der Klammerelemente. Zusammengefasst sind dies:
- Formen aus einem dünnen Blechstreifen eines Doppelwinkels mit einem Doppelsteg,
- Einprägen von Sicken, um Abstandshalter zu bilden, sowohl an Steg (Stegkopf/Bohlenabstand) als auch an den Winkelsohlen (Auflageabstand), eventuell mit offenem Stegfuß,
- besondere Geometrie der Nägel, also Länge ca. doppelt so groß wie der Bohlenabstand, mit rinnenförmige Querwölbung, konisch-räumlicher Schneidkante, aus der Stegwand horizontal oder vertikal herausgeschert,
- an der Unterseite der Winkelsohlen herausragende Messerleisten,
- Befestigungslöcher mit einem Ansenkwinkel größer als der Schraubenkopfwinkel eventuell als Quer-Langlöcher,
- Ausformung einer Anlaufschräge an den Enden der Winkelsohlen als Aufschiebehilfe für die Bohlen,
- Winkelsohlenbreite ca. doppelt so groß wie die Nagellänge
- Völliges Trennen der Doppelwinkel.

Kurzbeschreibung der Zeichnung, in der zeigen:
- Fig. 1:: eine Perspektivansicht einer Befestigungsklammer in Ausführung mit zusammengeschweißten L-Profilen und horizontal herausgescherten Nägeln,
- Fig. 2:: eine Draufsicht auf die Klammer nach Fig. 1, mit Ausführung mit Befestigungs-Langlöchern,
- Fig. 3:: eine schematische Ansicht von mehreren Befestigungsklammern in montiertem Zustand mit Bohlen auf einem Untergrund,
- Fig. 4:: eine Perspektivansicht einer Befestigungsklammer in Ausführung mit gefaltetem Doppelsteg und vertikal herausgescherten Nägeln,
- Fig. 5:: eine Ansicht ähnlich wie in Fig. 4, nur mit wechselweise angeordneten halben Winkelsohlen,
- Fig. 6:: eine Draufsicht eines Blechzuschnittes für die Befestigungsklammer nach Fig. 5,
- Fig. 7:: eine Perspektivansicht einer Befestigungsklammer in Ausführung mit Abstandssicken,
- Fig. 8:: eine Draufsicht auf einen Nagel nach Pfeil VIII aus Fig. 7,
- Fig. 9:: eine Draufsicht ähnlich wie in Fig. 9, jedoch mit abgerundeter Flankenform,
- Fig. 10:: einen axialen Schnitt X - X aus Fig. 8 durch den Nagel,
- Fig. 11:: eine Seitenansicht gemäß Pfeil XI aus Fig. 9,
- Fig. 12:: einen Schnitt durch die Nagelspitze gem. Linien XII - XII aus Fig. 8,
- Fig. 13:: eine Ansicht des Nagels von vorne gemäß Pfeil XIII aus Fig. 7,
- Fig. 14:: einen Schnitt nahe der Nagelwurzel gem. Linien XIV- XIV aus Fig. 8,
- Fig. 15:: einen Schnitt nach den Linien XV - XV aus Fig. 7, die BefestigungslochAnsenkung darstellend,
- Fig. 16:: einen Schnitt nach den Linien XVI - XVI aus Fig. 7 durch eine AuflageSicke mit Anschrägung,
- Fig. 17:: einen Schnitt gemäß Linien XVII - XVII aus Fig. 7, die Anordnung der Messerleiste an der einen Stirnkante der Winkelsohle zeigend,
- Fig. 18:: einen Schnitt XVIII - XVIII aus Fig. 7, die mittige Einformung von Messerkanten darstellend,
- Fig. 19:: einen Querschnitt durch eine Klammer in Ausführung ähnlich wie in Fig. 7, jedoch mit offenem Stegfuß und Gegenhaltewerkzeug,
- Fig. 20:: einen Schnitt durch eine Ausführung ähnlich wie in Fig. 19, mit breiterem, offenen Steg und schmalem Gegenhalte- bzw. Einschlagwerkzeug
- Fig. 21:: eine Perspektivansicht der Klammer in 5ter Ausführung, mit zwei quer verschieblichen Profilteilen, in zusammengeschobenem Zustand,
- Fig. 22:: eine Ansicht wie in Fig. 21, mit auseinandergezogenen Profilen, und
- Fig. 23:: einen Schnitt XXIII - XXIII durch die Klammer gem. Fig.21, mit aufgesetzten Bohlen.

### Wege zur Ausführung der Erfindung:

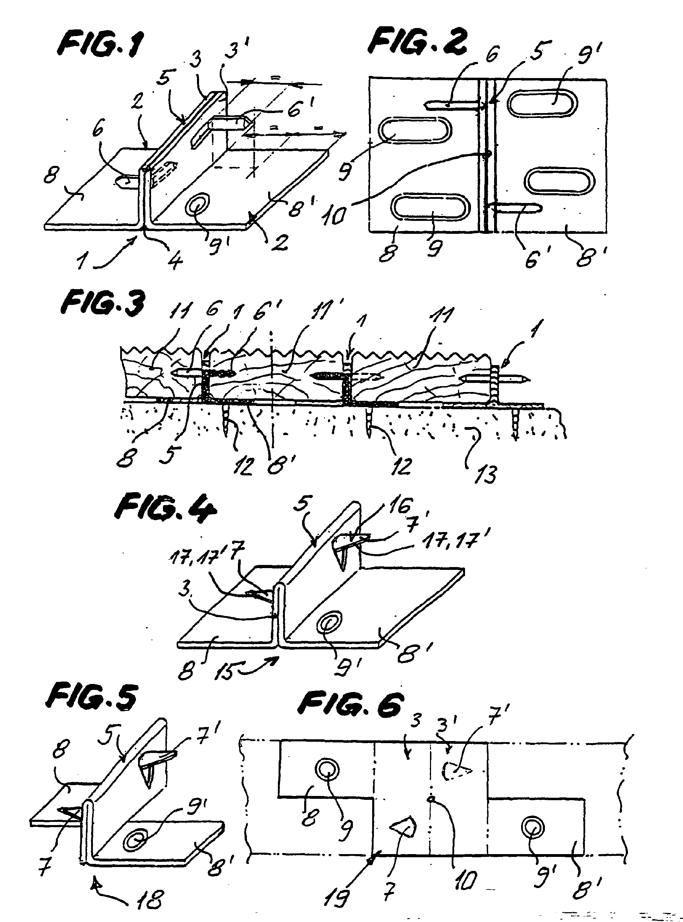

Bei der in Fig. 1 dargestellten Ausführungsform handelt es sich um eine Befestigungsklammer 1, die aus zwei L-Profilen 2, 2' zusammengesetzt ist, in dem die beiden Profile mit ihren vertikalen Schenkeln 3,3' aneinanderliegend über eine Schweißnaht 4 zu einem T-Profil verbunden sind. Die verschweißten Vertikalschenkel 3,3' bilden dabei einen vertikalen Steg 5, der durch die doppelte Materialdicke besonders stabil ist. Die jeweils zweiten Schenkel der L-Profile 2,2' sind fluchtend zueinander ausgerichtet und bilden jeweils von dem Steg 5 horizontal wegweisende Winkelsohlen 8,8', über die die Klammer auf einem hier nicht dargestellten Untergrund aufliegt. In diesen Winkelsohlen 8,8' ist jeweils ein Befestigungsloch 9,9' für eine nicht dargestellte Befestigungsschraube mit konischem Senkkopf vorgesehen. Aus den jeweiligen Schenkel des Vertikalsteges sind horizontal ausgeschert je ein senkrecht weisender Nagel 6 bzw. 6' herausgearbeitet, deren Rücken 16 jeweils senkrecht aus dem Steg und gleichzeitig parallel zu den Winkelsohlen 8,8' ausgerichtet sind. Zudem ist zu erkennen, dass die Länge der Nägel 6, 6' nur ungefähr halb so groß ist wie die Breite der Winkelsohlen 8,8'. Es ist des weiteren zu erkennen, dass die Nägel 6 und 6' so gestaltet sind, dass die Materialdoppelung, durch welche der Steg 5 gebildet ist, an keiner Stelle beidseitig durchbrochen ist. Die Öffnungsform für das Ausstülpen der Nägel ist dabei so geformt, dass die Nägel in dieser Form, z.B. durch Zurückschlagen mit einem Hammer wieder zurückgeführt werden können. Dies ist vorteilhaft für die Montage der ersten und letzten Bohle, da so eine Verletzungsgefahr durch überstehende Nägel vermieden wird.

Bei dem in Fig. 2 dargestellten Ausführungsbeispiel ist zu erkennen, dass es sich im wesentlichen um die gleiche Ausführungsform wie nach Fig. 1 handelt, nur dass die Nägel 6 und 6' spiegelbildlich zum Steg angeordnet sind und statt der beiden wechselseitig angeordneten Befestigungslöcher 9,9' nunmehr je Winkelsohle 8,8' zwei Befestigungslöcher 9,9' vorgesehen sind, die als quer verlaufende Langlöcher ausgebildet sind, wodurch ein Arbeiten der Bohlen in Querrichtung gegenüber dem Untergrund möglich ist. Die Klammern werden dabei so montiert, dass die Schrauben bei mittleren Witterungsverhältnissen in der Mitte der Langlöcher zu liegen kommen. Außerdem ist die Klammer so gestaltet, dass sie punktsymmetrisch zum Symmetriepunkt 10 ausgelegt ist, der sich mittig zum Steg und gleichzeitig zur gesamten Klammer befindet, wodurch die Klammer um 180° umgesetzt das jeweils gleiche Bild ergibt.

Fig. 3 zeigt drei Befestigungsklammern 1 mit Bohlen 11 montiert. In dieser Darstellung wurde die erste Klammer von rechts nach links in die linke Bohle 11 eingetrieben, wobei zunächst die linke Winkelsohle 8 als Auflagefläche, als Distanzhalter und Führungsfläche gedient hat. Die Fixierung der Bohle 11 beginnt in dem Moment, in dem der Nagel 6 in die Bohle eindringt und endet, wenn die Bohle den Steg 5 erreicht bzw. der Steg 5 an der Bohle ansteht. Danach wird die Klammer mittels der Schraube 12 im Untergrund 13 verschraubt. Es ist selbstverständlich, dass entlang der Bohle mehrere Klammern in Abständen von z.B. je 50 cm montiert und dort befestigt werden. Vorliegend wird jedoch immer nur von einer Klammer gesprochen. Es wird nun die nächste Bohle von rechts eingeführt, wobei die rechte Winkelsohle 8' zunächst als Auflagefläche, Führungsfläche und Distanzplatte dient und der Formschluß mit dem Eindringen des Metallnagels 6' beginnt. Dieser endet wiederum, wenn die zweite Bohle 11 den Steg 5 erreicht, also an diesem entsprechend ansteht. Die Montage setzt sich nun fort, indem die nächste Klammer mit der linken Winkelsohle unter die rechte Seite der mittleren Bohle geschoben und der linke Nagel eingetrieben wird. So geht es fort, bis zur letzten Bohle, die den Abschluß bildet.

Fig. 4 zeigt eine Befestigungsklammer 15, die auf den ersten Blick ähnlich der Klammer 1 nach Fig. 1 aussieht. Der Unterschied ist insbesondere darin zu sehen, dass die Klammer 15 nicht aus zwei zusammengeschweißten Winkeln, sondern aus einem durchgehenden Metallstreifen zu einem T-Profil geformt wurde. Auch sind die Nägel 6, 7,7' nicht horizontal, sondern vertikal ausgeschert, also ausgeschnitten und hochgebogen, weisen einen geraden senkrechten Nagelrücken 16 bzw. Nagelkamm auf und sind rinnenförmig nach unten offen gebogen und sie durch diese Querwölbung eine hohe Versteifung erfahren, so dass trotz großer Länge der Nägel ein Eintreiben in hartes Holz möglich ist. Zudem weisen sie konisch-räumliche Scherkanten 17 bzw. Scherflächen 17' auf, die an der Nagelkante bewirken, dass das Holz nicht aufplatzt. Die genauere Nagelform wird noch im Zusammenhang mit weiteren Zeichnungsfiguren nachfolgend näher beschrieben.

Fig. 5 zeigt eine Befestigungsklammer 18, die dem Grunde nach gleich mit der Klammer 15 nach Fig. 4 ausgebildet ist, nur dass nunmehr nicht Winkelsohlen 8,8' mit voller Länge, sondern nur noch mit halber Länge vorhanden sind, die, wie alle Ausbildungen an der Klammer mittelpunkt-symmetrisch angeordnet sind, also hier um die halbe Länge versetzt.

Fig. 6 zeigt eine Draufsicht auf einen Blechzuschnitt 19, aus dem durch entsprechende Biegen / Abkanten die Klammer 18 gemäß Fig. 5 hergestellt wird. Es ist zu erkennen, dass die wechselseitig abstehenden Winkelsohlen 8,8' halber Länge eine Materialersparnis beim Ausschneiden aus einem entsprechend langen Blechband, aus dem mehrere Klammerzuschnitte in Längsrichtung des Bandes herausgeschnitten werden, dabei jeweils in den Ausschnitt der einen Sohle die Sohle des nachfolgenden Zuschnitts formmäßig führungsgenau einpasst.

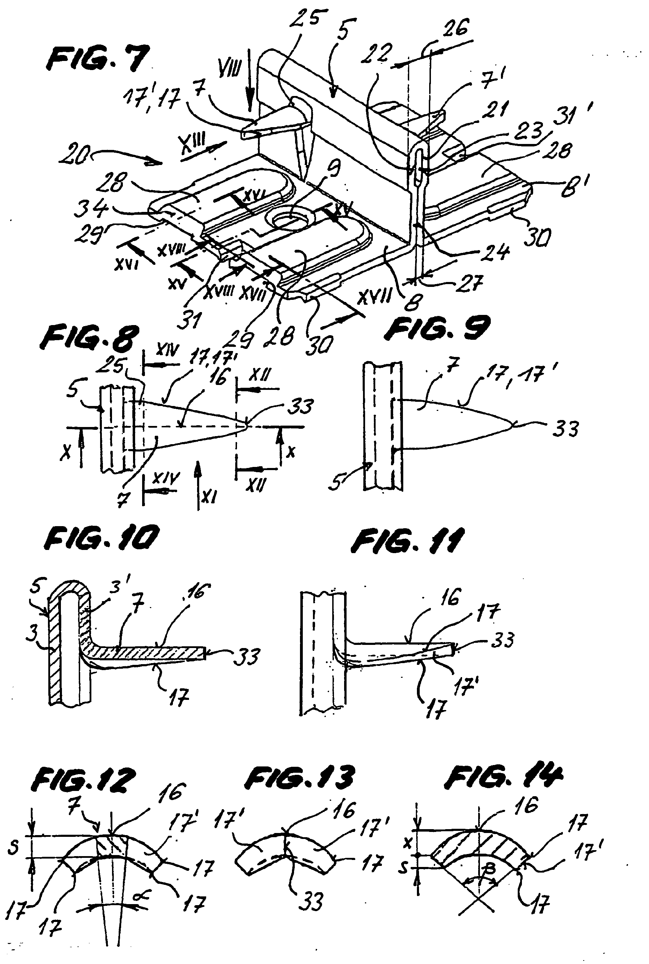

Bei dem in Fig. 7 dargestellten Ausführungsbeispiel handelt es sich um eine Befestigungsklammer 20 (vierte Ausführungsform), die eine komplexere Form der Klammer 15 nach Fig. 4 darstellt. Im Vergleich zu dieser sind am oberen Teil des Steges 5 zu beiden Seiten quer ausbauchende Sicken 21 und 22 vorgesehen, die zusammen einen hohlen Stegkopf 23 bilden. Am unteren Ende des Steges sind die beiden ebenen Blechteile spaltlos flach aufeinanderliegend vorgesehen, einen spaltlosen Stegfuß 24 bildend. Zudem ist anzumerken, dass die Nägel 7, 7' vertikal so aus den Stegwänden herausgeschert sind, dass sie vom Stegfuß 24 senkrecht und gleichzeitig parallel zu den Winkelsohlen 8,8' abragen, so dass sich die Nagelfüße 25 in den Stegkopfflanken/-sicken befinden.

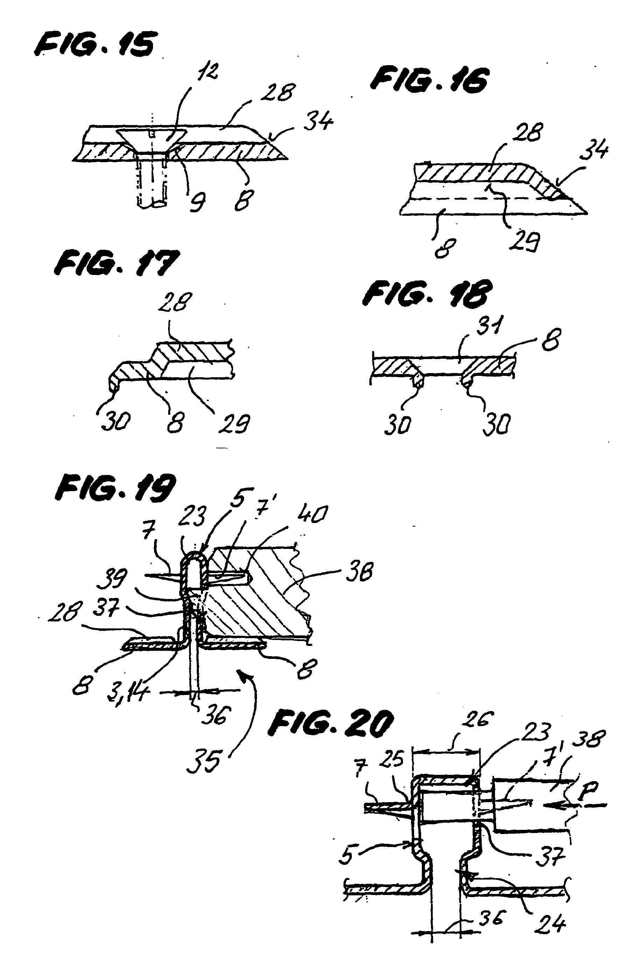

Zudem ist an der vorderen Stirnfläche der Klammer 20 zu erkennen, dass bei einer relativ geringen Blechdicke 27 von ca. 1,5 mm die Breite 26 des Stegkopfes mindestens 5 mm sein kann, also der optimale Mindestabstand zwischen den Bohlen aufweisen kann. An den Winkelsohlen 8,8' sind jeweils zwei Auflage- und Abstandssicken 28 eingearbeitet, die einen U-förmigen Querschnitt aufweisen. Die beiden Auflagesicken 28 verlaufen dabei parallel zueinander und sind voneinander so beabstandet, dass mittig dazwischen ein Befestigungsloch 9 eingebracht ist. Unter den Auflagesicken 28 sind Kanäle 29 ausgebildet, durch die eine Belüftung des Untergrundes optimiert wird. Schließlich ist an den jeweils äußeren stirnseitigen Enden der Winkelplatten 8,8' je eine Messerleiste 30 vorgesehen, die durch Abwärtsdrücken dieser Kantenzonen ausgebildet sind und in montiertem Zustand in den Untergrund eingreifen, wie insbesondere aus Fig. 17 erkennbar ist. An den äußeren Längskanten der Winkelsohlen 8,8' ist mittig zudem je eine rechteckige Ausnehmung 31,31' vorgesehen, die in Breitenerstreckung verlaufende Messerleisten 30 aufweist, die durch entsprechendes Einscheren und nach unten Drücken des Blechmaterials erhalten werden, wie insbesondere aus Fig. 18 ersichtlich ist.

In Fig. 7 ist auch zu erkennen, dass an den beiden Längskanten der Winkelsohlen 8,8' Anlaufschrägen 34 vorgesehen sind, die noch genauer aus Fig. 15 und 17 zu erkennen sind.

Fig. 8 zeigt in Draufsicht die Form eines Nagels 7 mit dem mittigen geraden Rücken 16, den seitlichen Scherkanten 17 bzw. Scherflächen 17', die zuerst in Höhe des Nagelfußes 25 parallel zueinander verlaufen, um dann den Nagel konisch zu verjüngen und schließlich in eine abgerundete Spitze 33 auszulaufen.

Eine ähnliche Ausbildung weist auch der in Fig. 9 dargestellte Nagel 7 auf, nur dass hier die Nagelflanken 17' bzw. die Scherkanten 17 nicht in einer gebrochenen Linie, sondern in einer relativ gleichmäßigen bogenförmigen Schweifung zugespitzt sind.

Aus Fig. 10 ist zu erkennen, wie aus der Vertikalwand 3' eines Doppelsteges 5 der Nagel 7 vertikal von unten nach oben herausgebogen ist und eine genau senkrechte Position einnimmt, so dass der Nagelrücken 16 einen geraden, senkrechten Verlauf zur Stegwand 3 besitzt. Es ist zu dem zu erkennen, dass die untere Seite der Scherfläche bzw. Scherflanke 17' in Richtung auf die Wand hin nach unten gezogen ist, wodurch sich eine größere Breite in der Zone des Nagelfußes und damit eine hohe Steifigkeit des Nagels insgesamt ergibt, was auch aus Fig. 11 ersichtlich ist, wobei hier auch die nach unten gezogene gewölbte Verbreiterung des Nagels entsprechend erkennbar ist.

Fig. 12, 13 und 14 zeigen den Nagel 7 in unterschiedlichen Schnitten bzw. Ansichten und es ist jeweils die geschweifte, nach unten offene Rinnenform zu erkennen, mit oberem geraden Nagelrücken 16, den seitlichen konisch, d.h. spitz zulaufenden Scherkanten 17 bzw. Scherflanken 17'und die mittige Nagelspitze 33. Durch die Vergrößerung des Winkels α in Fig. 12 in den Winkel β gemäß Fig. 14 und die Verschränkung der Scherflanken 17' von s an der Nagelspitze auf s' am Nagelfuß sowie der Wanderung der Scherflanken vom Nagelrücken aus um den Betrag "x" (Fig. 14), entstehen aus den Blechkanten bzw. -flanken sich verschränkende Flächen.

Aus Fig. 15 ist zu erkennen, dass die Befestigungslöcher 9 in den Winkelsohlen 8 so ausgebildet sind, dass deren Ansenkwinkel größer ist als der Schraubenkopfwinkel der Senkschraube 12, wodurch beim witterungsabhängigen Arbeiten der Bohle ein Schrägstellen des Schraubenkopfes und somit dessen Abreißen vermieden wird.

Aus Fig. 16 ist zu erkennen, dass durch die Sicken 28 eine besonders hohe Auflagefläche für die Bohlen an den Winkelsohlen 8,8' erreicht wird, dass ein Belüftungskanal 29 vorhanden ist und dass durch die Anlaufschrägen 34 ein bedeutend leichteres Aufschieben der Bohlen auf die Sohlenauflageflächen bzw. -sicken möglich ist.

Fig. 17 zeigt, wie an einer Winkelsohlenseite, die einerseits mit einer Sicke 28 ausge-stattet ist, die unter sich einen Belüftungskanal 29 ausbildet, die Außen- bzw. Stirnkante so nach unten gedrückt bzw. verformt ist, dass eine im Schnitt krallenförmig anmutende Messerleiste 30 vorhanden ist, die sich bei entsprechendem vertikalen Druck in den Untergrund einarbeitet.

Fig. 18 zeigt den Einschnitt 31 in den Winkelsohlen 8,8', dessen Quer-Kanten so nach unten gedrückt sind, dass auch hier Messerleisten 30 ausgebildet sind, die sich ebenfalls krallenförmig in den Untergrund einarbeiten.

Fig. 19 zeigt eine Klammer 35 (fünfte Ausführung) im Querschnitt, wobei diese Klammer im wesentlichen wie die Klammer 20 gemäß Fig. 7 ausgebildet ist, nur dass hier der Stegfuß 24 offen ist und die Nägel 7,7' mittig am Steg, d.h. zueinander fluchtend ausgerichtet sind. Die Stegfuß-Öffnung 36 beträgt mindestens ca. 0,5 mm, so dass diese Öffnung zusammen mit dem Hohlraum des Stegkopfes 23 einen Belüftungskanal bilden, wodurch die Bohlen und der Bohlenuntergrund optimal belüftbar sind. Da durch den hohlen Stegkopf und die Öffnung 36 zudem eine Querelastizität der Klammer vorhanden ist, die ein Einschlagen der Klammer an einer Bohle nicht optimal ausführbar macht, ist an der zum Einschlagnagel 7 angeordneten Gegenwand 14 eine Öffnung 37 vorgesehen. Durch diese reicht ein Zapfen eines Einschlagwerkzeugs 38 so hindurch, dass dessen Stirnfläche an der Rückseite der Wand, an welcher der einzuschlagende Nagel 7 herausragt, ansteht und gegenhält bzw. die Einschlagkraft direkt über die Wand auf den Nagel 7 überträgt. Es ist zu erkennen, dass bei jeweils mittiger Anordnung der beiden Nägel 7,7', also zueinander fluchtenden Ausrichtung, das Werkzeug 38 einerseits den einen Nagel 7' über den Zapfen 39 untergreift und andererseits stirnseitig eine Ausnehmung 40, in die der Nagel 7' hineinragt, besitzt.

Zudem zeigt Fig. 20 eine ähnliche Ausbildung wie Fig. 19, nur dass hier der Steg 5 sehr stark geöffnet ist, also eine große Breite 26 des Stegkopfes und eine große Stegfuß-Öffnung 36 besitzt. Da bei der hier dargestellten Ausführungsform keine fluchtende mittige Anordnung der Nägel 7,7', sondern eine in Längsrichtung versetzte Ausführung, wie vorbeschrieben und dargestellt (Punktsymmetrie), vorhanden ist, kann auch die Öffnung 37 auf gleicher Höhe mit dem Nagel 7 eingebracht sein, so dass das Einschlagwerkzeug 38 mit seinem Zapfen 39 genau am Nagelfuß 25 des Nagels 7 abstützend bzw. eintreibend einwirkt.

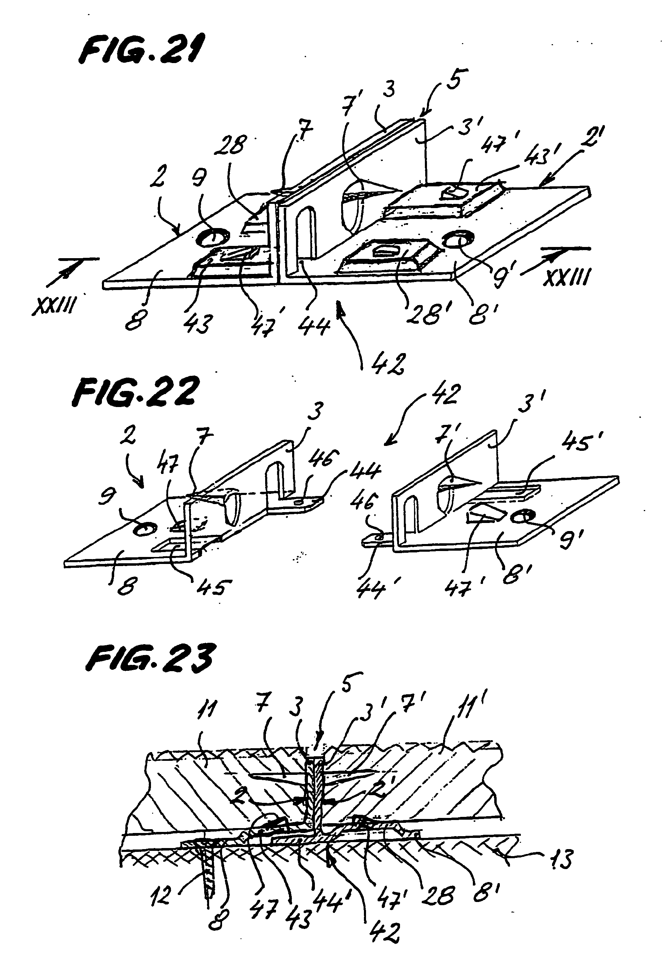

Aus Fig. 21 ist, als 5te Ausführungsform der Erfindung, eine Befestigungsklammer 42 zu erkennen, die - ebenfalls wie sie vorbeschriebenen Klammer-Ausführungen - aus zwei L-Profilen zusammengesetzt ist und die ebenfalls eine Mittensymmetrie aufweist, so dass auch hier mit der linken oder rechten Seite bei der Montage begonnen werden kann. Die Besonderheit dieser Ausführungsform besteht darin, dass die beiden L-Profile nicht mehr fest miteinander verbunden sind, sondern nur noch lose Einzelprofile sind, die paarweise zu einer Klammereinheit formschlüssig ineinandergreifend zusammengeschoben sind. Die beiden identischen Klammer-Profile 2, 2' besitzen mittig in den Vertikal-Schenkeln 3, 3', die im in Fig. 21 dargestellten Montagezustand den Doppelsteg 5 bilden, jeweils einen Nagel 7, 7', die somit in Querrichtung fluchtend zueinander angeordnet sind und deren Ausbildung bereits vorhergehend ausführlich beschrieben wurde. Selbstverständlich können auch hier in den die Stegwände bildenden Profilschenkeln 3, 3' einen Stegkopf bildende Längssicken vorgesehen sein, zur verbreiternden Auslegung des in Montagezustand gebildeten Doppelsteges 5. Es ist zu erkennen, dass in den Winkelsohlen 8, 8' Auflagesicken 28, 28' und Führungssicken 43, 43' vorgesehen sind. In die Führungssicken, die mindestens in Sohlendicke zur Schenkelinnenseite hin offen sind, reicht je eine Führungszunge 44, 44' horizontal und querverschieblich hinein, wie auch deutlicher aus Fig. 23 erkennbar ist. Die Führungszungen sind durch Ausscheren und um 90° bis auf fluchtende Ausrichtung mit den jeweiligen Winkelsohlen herausgebogen, ausgebildet. Auch weisen die Sohlen 8, 8' jeweils ein Befestigungsloch 9, 9' auf, das auch als Quer-Langloch ausgeführt sein kann. Auf den Sicken 28 und 43 ist zudem jeweils eine vertikal hervorstehende Einkerbung bzw. Ausbuchtung 47, 47' vorgesehen, die zur Erhöhung des Ausziehwiederstandes der im montierten Zustand aufliegenden Bohlen dient. Die Oberseite der Einkerbungen sind schräg ansteigend in Richtung auf die Vertikalschenkel 3, 3' ausgeführt; sie kann aber auch parallel zur Auflagefläche ausgebildet sein und sich in Richtung auf die Vertikalschenkel hin konisch verbreitern. An einem jeden Winkelprofil sind zwei Einkerbungsnägel vorgesehen und zwar in symmetrischer Anordnung zum Nagel 7, 7'.

Fig. 22 zeigt die Befestigungsklammer 42 aus Fig. 21, jedoch in in Querrichtung auseinander geschobenem Zustand der die Klammer bildenden Winkelprofile 2, 2'. Hier ist besonders deutlich die Ausformung der Führungszungen 44, 44' durch Ausscheren und Herausbiegen in Gegenrichtung zur jeweiligen Winkelsohle 8, 8' zu erkennen. Es sind als mit den Führungszungen zusammenarbeitende, zweite Führungselemente nicht Führungssicken wie in Fig. 21, sondern einfache rechteckige Führungsausschnitte 45, 45' vorhanden. Insgesamt ist zu erkennen, dass die beiden Winkelprofile 2, 2' identisch sind, was sowohl bei der Herstellung als auch bei der Montage große Vorteile bringt. Zudem sind in den Zungen 44, 44' jeweils eine Befestigungsbohrung 46, 46' vorhanden, welche die Nutzung der Winkelprofile auch als Anfangs- oder Endstücke erlauben. In den Winkelsohlen 8, 8' sind auch Einkerbungen 47, 47' vorgesehen und zwar im wesentlichen mittig, unter dem Nagel 7,7'.

Schließlich zeigt Fig. 23 eine auf einem Untergrund 13 aufgesetzte, montierte Klammer 42 mit Bohlen 11, 11'. Es ist zu erkennen wie die Bohlen 11, 11' mit eingetriebenen Nägeln 7, 7' auf den Sicken 43 bzw. 28 aufliegen und die Einkerbungsnägel 47, 47' in die Bohlenunterseite eingedrückt sind. Die Führungszunge 44 des rechten Winkelprofils 2' reicht dabei in die Führungsöffnung der Führungssicke 43 des linken Winkelprofils 2 hinein.

Bei der Montage werden die beiden Winkelprofile 2, 2' mittels der Führungszungen ineinandergeschoben und als Einheit montiert. Dabei wird ein auf der Innenseite des durch die beiden Vertikalschenkel 2, 2' gebildeten Steges aufgesetzter, an der Stelle des Nagels freigelegter Druckkörper angesetzt und mit dem Hammer oder einem Einpresswerkzeug montiert. Es kann gleichermaßen von rechts nach links als auch von links nach rechts montiert werden. Nach dem Einpressen eines Winkelprofils 2, 2' wird die zweite Winkelplatte am Untergrund 13 z: B. mit einer Schraube 12 befestigt. Danach wird die nächste Bohle am freien Nagel angesetzt und eingeschlagen oder eingepresst. Nun wiederholt sich der Vorgang.

Tritt nun z. B. ein Schwund in der Bohle auf, dann verschieben sich die Führungselemente zueinander, also die Führungszungen in den Führungsausschnitten bzw. Führungssicken. Die Vertikalschenkel der Winkelprofile bleiben infolge der eingeschlagenen Nägel und deren Ausziehwiderstand fest mit den Bohlen verbunden. Aus Fig. 23 ist auch zu erkennen, dass der Abstand der Bohlen zueinander und zum Untergrund über die Dicke des Materials und der eingeformten Sicken auf das erforderliche Maß bringbar sind.

### Gewerbliche Anwendbarkeit:

Der Gegenstand der Erfindung ist in der Bauindustrie zum Verbinden von Holzbauteilen untereinander und auf einem Untergrund, insbesondere von Bohlen von Balkon- und Terrassenabdeckungen im Freien, oder von Balken, gewerblich anwendbar.

### Bezugszeichenliste:

- 1.: Befestigungsklammer, erste Ausf.
- 2,2': L-Profile
- 3,3': Vertikaler Schenkel
- 4.: Schweißnaht
- 5.: Steg
- 6,6': Nagel, horizontal
- 7,7': Nagel, vertikal
- 8,8': Winkelsohle
- 9, 9': Befestigungsloch
- 10.: Symmetriepunkt
- 11.: Bohlen
- 12.: Schrauben
- 13: Untergrund
- 14.: ----
- 15: Befestigungsklammer, zweite Ausf.
- 16: Rücken
- 17: Scherkanten
- 17': Scherfläche/-flanke
- 18: Befestigungsklammer, dritte Ausf.
- 19: Blechzuschnitt
- 20: Befestigungsklammer, vierte Ausf.
- 21: Sicke
- 22: Sicke
- 23: Stegkopf
- 24: Stegfuß
- 25: Nagelfuß
- 26: Breite Stegkopf
- 27: Blechdicke
- 28,28': Auflagesicken
- 29: Kanal
- 30: Messerleiste
- 31, 31': Ausnehmung
- 32.: ----
- 33.: Nagelspitze
- 34.: Anlaufschräge
- 35.: Befestigungsklammer, fünfte Ausf.
- 36.: Stegfuß-Öffnung
- 37.: Einführöffnung
- 38.: Einschlagwerkzeug
- 39.: Zapfen
- 40.: Ausnehmung
- 41.: ------
- 42.: Befestigungsklammer, 5te Ausf.
- 43.: Führungssicke
- 44.: Führungszunge
- 45.: Führungsausschnitt
- 46,47': Befestigungsbohrung
- 47,47': Einkerbung/Ausbuchtung

## Patentansprüche

1. Befestigungsklammer zum Verbinden von Holzbauteilen untereinander und auf einem Untergrund, insbesondere von Bohlen von Balkon- und Terrassenabdeckungen, vorzugsweise im Freien, mit
- einem vertikalen Steg (5),
- oben zu beiden Seiten des Steges mindestens je einem senkrecht/horizontal abragenden, zungenförmig zugespitzten Nagel (6,6', 7, 7'),
- unten zu beiden Seiten des Steges senkrecht/horizontal abragenden Winkelsohlen(8,8'),**dadurch gekennzeichnet, dass**
- die Befestigungsklammer (1, 15, 18, 20, 35, 42) ein aus zwei L-Profilen (2, 2') zusammengesetzter Doppelwinkel ist,
- der Steg (5) ein aus zwei Profilschenkeln (3, 3') zusammengesetzter Doppelsteg ist,
und in mindestens einer der Winkelsohlen (8, 8') mindestens eine Befestigungsbohrung (9, 9') vorgesehen ist.

2. Befestigungsklammer nach Anspruch 1, **dadurch gekennzeichnet,**
**dass** die beiden L-Profile (2, 2') der Klammer (1) mit ihren Vertikal-Schenkeln (3, 3') flach aneinander liegend miteinander durch Schweißen, Nieten oder fügetechnisch zu einem liegenden T-Profil verbunden sind.

3. Befestigungsklammer nach Anspruch 1, **dadurch gekennzeichnet,**
**dass** die Klammer: (15, 18, 20, 35) aus einem durchgehenden Metallstreifen biegetechnisch als T-Profil geformt ist.

4. Befestigungsklammer nach Anspruch 1, **dadurch gekennzeichnet,**
**dass** die zungenförmigen Nägel (6, 6', 7, 7') nahe des oberen Stegendes angeordnet und aus der Stegwand (3, 3') geschnitten und senkrecht zu dieser herausgebogen sind.

5. Befestigungsklammer nach Anspruch 4, **dadurch gekennzeichnet,**
**dass** auf jeder Stegseite ein Nagel (6, 6' bzw. 7, 7') vorhanden ist, wobei diese jeweils mittig oder zur Mitte (10) der Längserstreckung des Steges (5) versetzt zueinander angeordnet sind, also mittensymmetrisch.

6. Befestigungsklammer nach Anspruch 4, **dadurch gekennzeichnet,**
**dass** die Nägel (6, 6', 7, 7') horizontal oder vertikal, d.h. parallel oder senkrecht im Verhältnis zu den Winkelsohlen (8, 8') aus den Stegwänden (3,3') herausgeschert sind.

7. Befestigungsklammer nach Anspruch 4, **dadurch gekennzeichnet,**
**dass** die Nägel (6, 6', 7,7') rinnen- oder bogenförmig und auch am Nagelfuß (25) gewölbt ausgeführt sind, zur Spitze (33) hin sich verjüngend, ähnlich einem geraden Vogelschnabel, mit geringem Radius an der Spitze (33), wobei die Seiten- bzw. Scherkanten (17) bzw. die dazwischen liegenden jeweiligen Scherflächen (17'), eine räumliche Schweifung oder Verschränkung zur Vertikalen erfahren, von ca. 45° am Nagelfuß bis 0° an der Nagelspitze (33).

8. Befestigungsklammer nach Anspruch 1, **dadurch gekennzeichnet,**
**dass** am oberen äußeren Teil des Doppelsteges (5) beidseitig längsverlaufend jeweils eine Quer-Ausbauchung in Form einer Sicke (21, 22) vorgesehen ist, gemeinsam eine hohle Doppelsicke und damit einen Stegkopf (23) bildend, aus dem die Nägel (6,6', 7,7') abstehen.

9. Befestigungsklammer nach Anspruch 8, **dadurch gekennzeichnet,**
**dass** bei einer Materialdicke von ca. 1,5 mm die Breite (26) des Stegkopfes (23) mindestens 5 mm beträgt.

10. Befestigungsklammer nach Anspruch 8, **dadurch gekennzeichnet,**
**dass** der Steg (5) geschlossen, d.h. die Stegbleche aneinander liegend oder offen, d.h. die Bleche auf mindestens 0,5 mm Öffnung (36) zueinander beabstandet sind, einen offenen Stegfuß (24) bildend.

11. Befestigungsklammer nach Anspruch 10, **dadurch gekennzeichnet,**
**dass** die Nägel (7, 7'), zumindest die Nagelfüße (25), am Stegkopf (23) angeordnet sind und an der Gegenwand der den Nagel tragenden Wand des Stegkopfes eine Öffnung (37) zum Hindurchführen eines Einschlagwerkzeuges (38) vorgesehen ist.

12. Befestigungsklammer nach Anspruch 1,
**dadurch gekennzeichnet, dass** die Breite der Winkelsohlen (8, 8') größer ist als die Länge der Nägel (6, 6', 7,7'), vorzugsweise ca. doppelt so lang.

13. Befestigungsklammer nach Anspruch 1, **dadurch gekennzeichnet,**
**dass** die Winkelsohlen (8, 8') gleich lang sind wie der Doppelsteg (5) oder nur die halbe Länge des Doppelsteges aufweisen, wobei die beiden Halbsohlen um die halbe Steglänge versetzt, aber wechselseitig abragend, zueinander angeordnet sind, in Mittelpunktsymmetrie.

14. Befestigungsklammer nach Anspruch 1, **dadurch gekennzeichnet,**
**dass** an den Winkelsohlen (8, 8') jeweils mindestens eine nach oben, in Richtung auf die Nägel ausgebildete Erhebung in Form einer in Quer-Richtung bzw. Breitenerstreckung der Sohle sich erstreckende Auflage-Sicke (28) vorgesehen ist, wobei die Sicken einen bogen-, dach- oder U-förmigen Querschnitt aufweisen können.

15. Befestigungsklammer nach Anspruch 14, **dadurch gekennzeichnet,**
**dass** an jeder Winkelsohle (8, 8') zwei parallel zueinander beabstandete Sicken (28) vorgesehen sind und mittig dazwischen die Befestigungsbohrung (9, 9') angeordnet ist.

16. Befestigungsklammer nach Anspruch 1, **dadurch gekennzeichnet,**
**dass** die Befestigungsbohrung (9, 9') zur zumindest teilweisen Aufnahme des konischen Kopfes einer Senkschraube (12) kegelig angesenkt ist und der Senkwinkel größer ist als der Winkel des Schraubenkopfes.

17. Befestigungsklammer nach Anspruch 1, **dadurch gekennzeichnet,**
**dass** die Befestigungsbohrungen (9, 9') in Querrichtung sich erstreckende Langlöcher sind.

18. Befestigungsklammer nach Anspruch 1, **dadurch gekennzeichnet,**
**dass** an den längsseitigen Enden der Winkelsohlen (8, 8'), in Bohleneinschiebrichtung, Auflaufschrägen (34) vorgesehen sind, die auch die entsprechenden Enden der Sicken (28) mit umfassen.

19. Befestigungsklammer nach Anspruch 1, **dadurch gekennzeichnet,**
**dass** an den Winkelsohlen (8, 8') mindestens eine krallenförmige Messerleiste (30) nach unten herausstehend eingeformt bzw. herausgebogen ist.

20. Befestigungsklammer nach Anspruch 19, **dadurch gekennzeichnet,**
**dass** die Messerleisten (30) an beiden Seitenkanten der Winkelsohlen (8, 8') vorgesehen sind, wobei sie zumindest am vorderen Ende und auf eine Länge von mindestens einem Sechstel der Sohlenbreite vorhanden sind.

21. Befestigungsklammer nach Anspruch 19, **dadurch gekennzeichnet,**
**dass** jeweils in der Mittelzone der Winkelsohlen (8, 8') eine im wesentlichen U-Rechteckausnehmung (31) mit der Tiefe von einer Bruchzahl der Sohlenbreite vorgesehen ist, wobei die in Quererstreckung der Sohlen verlaufenden Seitenkanten als krallenförmige Messerleisten (30) nach unten herausgedrückt sind.

22. Befestigungsklammer nach Anspruch 1, **dadurch gekennzeichnet,**
**dass** die Klammer (42) aus zwei einzelnen losen L-Profilen (2, 2') gebildet ist, die so zu einer Klammereinheit zusammensteckbar bzw. miteinander in Verbindung bringbar sind, dass durch einen formmäßigen Eingriff der Profile ineinander eine zumindest geringfügige Verschiebung der Profile zueinander in Querrichtung, nicht jedoch in Längsrichtung, möglich ist.

23. Befestigungsklammer nach Anspruch 22, **dadurch gekennzeichnet,**
**dass** zum formmäßigen Eingriff der beiden Klammerprofile (2, 2') Quer-führungselemente (43, 44, 45) an diesen vorgesehen sind, die einerseits aus einer aus dem Steg (3, 3') herausragenden Führungszunge (44) und andererseits aus einer zu dieser fluchtend im Gegenprofil vorgesehenen Führungsöffnung (43 bzw. 45) besteht.

24. Befestigungsklammer nach Anspruch 23, **dadurch gekennzeichnet,**
**dass** die Führungszungen (44) aus dem Profilsteg (3, 3') herausgeschert und zu diesem senkrecht herausstehend und gleichzeitig zu den Winkelsohlen fluchtend ausgebildete Rechtecke sind, während die Führungsöffnungen entweder entsprechend quer durch die Stege hindurch und in die Winkelsohlen hineinreichende Ausschnitte (45) oder Führungssicken (43) sind.

25. Befestigungsklammer nach Anspruch 23 und mindestens einem der vorhergehenden Ansprüche, **dadurch gekennzeichnet,**
**dass** der an jedem Profil (2, 2') vorgesehene Nagel (7, 7') mittig am Profilschenkel angeordnet ist, während die Führungseinrichtungen entsprechend versetzt zur Mitte vorgesehen sind.

26. Befestigungsklammer nach Anspruch 24, **dadurch gekennzeichnet,**
**dass** in den Bohlen-Auflageflächen der Winkelsohlen (8, 8') oder Sicken (43, 45) min. eine vertikal aufragende Ausbuchtung oder Einkerbung (46, 46') in Art eines Nagels nach oben heraussteht, wobei diese in Richtung auf den Steg eine Steigung aufweisen oder deren Oberseite parallel zur Sohlen- bzw. Sickenoberfläche ist und deren Unterseite sich in gleiche Richtung hin konisch erweitert.

## Claims

1. A fixing bracket for joining wooden building components to each other and to a substrate, particularly for joining boards used to cover balconies and decks, preferably outdoors, said bracket having
- a vertical web (5),
- at least one tongue-shaped pointed spike (6, 6', 7, 7') projecting perpendicularly/horizontally at the top to both sides of the web,
- angle flanges (8, 8') projecting perpendicularly/horizontally at the bottom to both sides of the web, **characterized in that**
- the fixing bracket (1, 15, 18, 20, 35, 42) is a double angle consisting of two combined L-sections (2, 2'),
- the web (5) is a double web consisting of two section legs (3, 3'),
- and at least one fixing hole (9, 9') is provided in at least one of the angle flanges (8, 8').

2. The fixing bracket according to Claim 1, **characterized in that** the two L-sections (2, 2') of the bracket (1) are joined together with their vertical section legs (3, 3') lying flat against each other to form a prone T-section by means of welding, riveting or joining techniques.

3. The fixing bracket according to Claim 1, **characterized in that** the bracket (15, 18, 20, 35) is made as a T-section from a continuous metal strip by means of bending techniques.

4. The fixing bracket according to Claim 1, **characterized in that** the tongue-shaped spikes (6, 6', 7, 7') are arranged near the upper end of the web and are cut out of the web wall (3, 3') and bent out perpendicularly to said wall.

5. The fixing bracket according to Claim 4, **characterized in that** there is a spike (6, 6' or 7, 7') on each web side, whereby these spikes are each arranged centered or offset from the center (10) relative to the lengthwise extension of the web (5), that is to say, they are arranged mid-point symmetrically.

6. The fixing bracket according to Claim 4, **characterized in that** the spikes (6, 6', 7, 7') are cut out of the web walls (3, 3') horizontally or vertically, i.e. parallel or perpendicular relative to the angle flanges (8, 8').

7. The fixing bracket according to Claim 4, **characterized in that** the spikes (6, 6', 7, 7') are curved so as to be gutter-shaped or arch-shaped, also at the spike foot (25), tapering towards the tip (33), similar to a straight bird beak, with a smaller radius at the tip (33), whereby the side edges and cut edges (17) or each of the cut surfaces (17') that lie in-between undergo a spatial curving or twisting relative to the vertical, from about 45° at the spike foot to 0° at the spike tip (33).

8. The fixing bracket according to Claim 1, **characterized in that** there is a crosswise bulge in the form of beads (21, 22) at the upper outer part of the double web (5), running on both sides in the lengthwise direction, said beads together forming a hollow double bead and thus forming a web head (23) from which the spikes (6, 6', 7, 7') protrude.

9. The fixing bracket according to Claim 8, **characterized in that**, at a material thickness of approximately 1.5 mm, the width (26) of the web head (23) is at least 5 mm.

10. The fixing bracket according to Claim 8, **characterized in that** the web (5) is closed, i.e. the web metal pieces lie against each other or else it is open, that is to say, the metal pieces are at a distance from each other with an opening (36) of at least 0.5 mm, thus forming an open web foot (24).

11. The fixing bracket according to Claim 10, **characterized in that** the spikes (7, 7'), at least the spike feet (25), are arranged on the web head (23) and, on the wall opposite from the wall of the web head that bears the spike, there is an opening (37) through which a driving tool (38) can be inserted.

12. The fixing bracket according to Claim 1, **characterized in that** the width of the angle flanges (8, 8') is greater than the length of the spikes (6, 6', 7, 7'), preferably about twice as long.

13. The fixing bracket according to Claim 1, **characterized in that** the angle flanges (8, 8') are the same length as the double web (5) or only half the length of the double web, whereby the two half flanges are arranged with respect to each other so as to be offset by half of the length of the web, but alternately projecting, in mid-point symmetry.

14. The fixing bracket according to Claim 1, **characterized in that**, on the angle flanges (8, 8'), there is at least one elevation in the form of a support bead (28) that runs crosswise or in the direction of the widthwise extension extending upwards in the direction of the spikes, whereby the beads can have an arched, roof-like or U-shaped cross section.

15. The fixing bracket according to Claim 14, **characterized in that**, on each angle flange (8, 8'), there are two support beads (28) spaced parallel to each other and there is a fixing hole (9, 9') in the middle between them.

16. The fixing bracket according to Claim 1, **characterized in that**, the fixing hole (9, 9') is conically countersunk in order to at least partially accommodate the conical head of a countersunk screw (12) and the countersinking angle is greater than the angle of the screw head.

17. The fixing bracket according to Claim 1, **characterized in that**, the fixing holes (9, 9') are oblong holes extending in the crosswise direction.

18. The fixing bracket according to Claim 1, **characterized in that**, on the lengthwise sides of the angle flanges (8, 8'), there are ramp-like sliding surfaces (34) that also encompass the corresponding ends of the beads (28).

19. The fixing bracket according to Claim 1, **characterized in that** at least one claw-like blade strip (30) that projects downwards has been shaped into or bent out of the angle flanges (8, 8').

20. The fixing bracket according to Claim 19, **characterized in that** the blade strips (30) are provided on both side edges of the angle flanges (8, 8'), whereby they are present at least on the front end, and over a length of at least one-sixth the width of the flange.

21. The fixing bracket according to Claim 19, **characterized in that**, in each case in the middle zone of the angle flanges (8, 8'), there is an essentially U-shaped rectangular recess (31) that has a depth of a fraction of the flange width, whereby the side edges running in the crosswise extension of the flanges are bent out downwards in the form of claw-shaped blade strips (30).

22. The fixing bracket according to Claim 1, **characterized in that** the bracket (42) consists of two individual loose L-sections (2, 2') that can be put together or joined to each other to form a bracket unit in such a way that, through a positive fitting engagement of the sections with each other, at least a slight crosswise shifting of the two sections is possible relative to each other, but not in the lengthwise direction.

23. The fixing bracket according to Claim 22, **characterized in that**, in order to achieve the positive fitting engagement of the two bracket sections (2, 2'), they are provided with crosswise guide elements (43, 44, 45) consisting, on the one hand, of a guide tongue (44) projecting from the web (3, 3') and, on the other hand, of a guide opening (43 or 45) in alignment with the former and provided in the opposite section.

24. The fixing bracket according to Claim 22, **characterized in that** the guide tongues (44) are cut out of the section web (3, 3') and they are rectangles configured so as to project perpendicularly to said web and, at the same time, to be in alignment with the angle flanges, while the guide openings are either cutouts (45) or guide beads (43) that pass correspondingly crosswise through the webs and extend into the angle flanges.

25. The fixing bracket according to Claim 23 and at least one of the preceding claims, **characterized in that** the spike (7, 7') provided on each section (2, 2') is centered on the section leg while the guide means are provided correspondingly off-center.

26. The fixing bracket according to Claim 24, **characterized in that**, in the board support surfaces of the angle flanges (8, 8') or beads (43, 45), there is at least one vertically upright bulge or notch (47, 47') projecting upwards like a cleat, whereby the latter has a slant in the direction of the web or its top is parallel to the flange or bead surface and its bottom widens conically in the same direction.

## Revendications

1. Bride de fixation servant à l'assemblage d'éléments de construction en bois entre eux et sur un support, notamment de madriers de chapes de balcon et de terrasses, de préférence en plein air, comportant
- un entretoise (5),
- au moins un clou respectivement sous forme de languette pointue (6,6',7,7') qui saille perpendiculairement/horizontalement des deux côtés de l'entretoise dans sa partie supérieure
- des semelles d'équerre (8,8') saillissant perpendiculairement/horizontalement des deux côtés de l'entretoise dans sa partie inférieure,
**caractérisée en ce que**
- la bride de fixation (1, 15, 18, 20, 35, 42) est une équerre double composée de deux profilés en L (2,2'),
- l'entretoise (5) est une entretoise double composée de deux branches de profilé (3,3'),
et qu'au moins un trou de fixation (9,9') est prévu dans au moins l'une des semelles d'équerre (8,8').

2. Bride de fixation selon la revendication 1, **caractérisée en ce que** les deux profilés en L (2,2') de la bride (1) sont fixés l'un contre l'autre de façon plane par leurs branches verticales (3,3'), par soudage, rivetage ou d'autres techniques d'assemblage, pour former un profilé en T horizontal.

3. Bride de fixation selon la revendication 1, **caractérisée en ce que** la bride (15, 18, 20, 35) est façonnée par pliage comme profilé en T à partir d'une bande métallique continue.

4. Bride de fixation selon la revendication 1, **caractérisée en ce que** les clous en forme de languettes (6, 6',7,7') sont disposés à proximité de l'extrémité supérieure de l'entretoise, découpés de la paroi de l'entretoise (3,3') et saillissent perpendiculairement de cette dernière.

5. Bride de fixation selon la revendication 4, **caractérisée en ce que** chaque côté de l'entretoise présente un clou (6,6' et 7,7' respectivement), disposés l'un par rapport à l'autre de façon décalée symétriquement par rapport au milieu (10) du développement longitudinal de l'entretoise (5).

6. Bride de fixation selon la revendication 4, **caractérisée en ce que** les clous (6,6',7,7') sont découpés des parois de l'entretoise (3,3') et en saillissent horizontalement ou verticalement, à savoir parallèlement ou perpendiculairement par rapport aux semelles d'équerre (8,8').

7. Bride de fixation selon la revendication 4, **caractérisée en ce que** les clous (6,6',7,7') sont réalisés sous forme de rigole ou d'arc, arqués au niveau du pied du clou (25) et en cône vers la pointe (33), ressemblant à un bec d'oiseau droit à rayon réduit à la pointe (33), les arêtes latérales ou de cisaillement (17) et les surfaces de cisaillement (17') entre celles-ci subissant un cintrage dans l'espace par rapport à la verticale d'env. 45° au niveau du pied jusqu'à 0° au niveau de la pointe du clou (33).

8. Bride de fixation selon la revendication 1, **caractérisée en ce que** à la partie extérieure supérieure de l'entretoise double (5), un bombement transversal sous forme de moulure (21,22) est prévu des deux côtés qui s'étend longitudinalement, les deux bombements formant ensemble une moulure double creuse, à savoir une tête d'entretoise (23) dont sortent les clous (6,6',7,7').

9. Bride de fixation selon la revendication 8, **caractérisée en ce que** pour une épaisseur de matériau d'env. 1,5 mm, la largeur (26) de la tête d'entretoise (23) est d'au moins 5 mm.

10. Bride de fixation selon la revendication 8, **caractérisée en ce que** l'entretoise (5) est fermée, à savoir les tôles d'entretoise se touchent, ou ouverte, à savoir les tôles sont disposées avec un écart (36) d'au moins 0,5 mm l'une par rapport à l'autre formant ainsi un pied d'entretoise (24) ouvert.

11. Bride de fixation selon la revendication 10, **caractérisée en ce que** les clous (7,7'), tout au moins les pieds de clou (25), sont disposés sur la tête d'entretoise (23) et que, sur la contre-paroi de la paroi de la tête d'entretoise portant le clou, un orifice (37) est prévu pour faire passer un outil à enfoncer (38).

12. Bride de fixation selon la revendication 1, **caractérisée en ce que** la largeur des semelles d'équerre (8,8') est supérieure à la longueur des clous (6,6',7,7'), de préférence du double.

13. Bride de fixation selon la revendication 1, **caractérisée en ce que** les semelles d'équerre (8,8') présentent la même longueur que l'entretoise double (5), ou seulement la demi-longueur de cette dernière, les deux demi-semelles étant disposées l'une par rapport à l'autre de façon décalée de la moitié de la longueur de l'entretoise, faisant saillie en alternance, en symétrie centrale.

14. Bride de fixation selon la revendication 1, **caractérisée en ce que** au moins une élévation dirigée vers les clous se présentant sous forme d'une moulure d'appui (28) qui s'étend en direction transversale ou sur la largeur de la semelle, est prévue sur chacune des semelles d'équerre (8,8'), lesdites moulures pouvant présenter une section en forme d'arc, de toit ou en U.

15. Bride de fixation selon la revendication 14, **caractérisée en ce que** deux moulures (28) sont disposées parallèlement sur chaque semelle d'équerre (8.8'), et que les trous de fixation (9,9') sont aménagés au milieu de l'intervalle entre lesdites moulures.

16. Bride de fixation selon la revendication 1, **caractérisée en ce que** le trou de fixation (9,9') est fraisé en cône pour recevoir au moins partiellement la tête conique d'une vis à tête fraisée (12) et que l'angle de fraisure est plus grand que l'angle de la tête de vis.

17. Bride de fixation selon la revendication 1, **caractérisée en ce que** les trous de fixation (9,9') sont des trous oblongs s'étendant dans le sens transversal.

18. Bride de fixation selon la revendication 1, **caractérisée en ce que** les extrémités longitudinales des semelles d'équerre (8,8') présentent des chanfreins de glissage (34) dans le sens d'insertion des madriers qui s'étendent également sur les extrémités correspondantes des moulures (28).

19. Bride de fixation selon la revendication 1, **caractérisée en ce que** les semelles d'équerre (8,8') présentent au moins un rebord à lame en forme de crampon (30) qui est formé et replié vers le bas à partir desdites semelles.

20. Bride de fixation selon la revendication 19, **caractérisée en ce que** les rebords à lame (30) sont prévus sur les deux arêtes latérales des semelles d'équerre (8,8'), au moins à l'extrémité avant de celles-ci sur une longueur d'au moins un sixième de la largeur de la semelle.

21. Bride de fixation selon la revendication 19, **caractérisée en ce que** dans la zone centrale des semelles d'équerre (8,8') est prévu un évidement rectangulaire essentiellement en U (31) dont la profondeur est égale à une fraction de la largeur de la semelle, les arêtes latérales s'étendant dans le sens transversal des semelles étant repliées vers le bas en tant que rebords à lame en forme de crampon (30).

22. Bride de fixation selon la revendication 1, **caractérisée en ce que** la bride (42) consiste en deux profilés en L détachés (2,2') qui peuvent être assemblés ou reliés entre eux de sorte que, de par leur forme, les profilés s'engagent l'un dans l'autre de façon à ce que les profilés puissent se déplacer au moins légèrement l'un par rapport à l'autre dans le sens transversal, mais pas dans le sens longitudinal.

23. Bride de fixation selon la revendication 22, **caractérisée en ce que**, pour permettre que les deux profilés (2,2') de la bride puissent s'engager l'un dans l'autre, ceux-ci comportent des éléments de guidage transversal (43,44,45) consistant d'une part en une languette de guidage (44) faisant saillie de l'entretoise (3,3') et d'autre part en un orifice de guidage (43 et 45 respectivement) prévu dans le contre-profilé en alignement avec ladite languette.

24. Bride de fixation selon la revendication 23, **caractérisée en ce que** les languettes de guidage (44) sont des rectangles découpés de l'entretoise du profilé (3,3') qui en font saillie perpendiculairement et s'alignent aux semelles d'équerre, tandis que les orifices de guidage sont ou des découpes (45) s'étendant transversalement à travers les entretoises jusque dans les semelles d'équerre ou des moulures de guidage (43).

25. Bride de fixation selon la revendication 23 et selon au moins l'une quelconque des revendications précédentes, **caractérisée en ce que** le clou (7,7') prévu sur chaque profilé (2,2') est disposé au milieu de la branche du profilé, tandis que les moyens de guidage sont prévus décalés par rapport au milieu.

26. Bride de fixation selon la revendication 24, **caractérisée en ce que** sur les surfaces d'appui des madriers, à savoir sur les semelles d'équerre (8,8') ou les moulures (43,45), est disposée au moins une saillie ou encoche (46,46') qui, comme un clou, fait saillie, et qui présentent une inclinaison en direction de l'entretoise ou dont la face supérieure est parallèle à la surface supérieure de la semelle ou de la moulure et dont la partie inférieure s'élargit de façon conique dans le même sens.
